# FASCICULE DE BREVET EUROPEEN

(11) **EP 0 844 714 B1**
(45) Date de publication et mention de la délivrance du brevet: **25.09.2002**
(21) Numéro de dépôt: 97402819.3
(22) Date de dépôt: 24.11.1997
(51) Int. Cl.: H02G 3/12

(54) **Accessoire d'immobilisation d'appareil électrique à clipsage direct**
Arretierungszubehör für ein direkt einrastbares elektrisches Gerät
Locking accessory for a direct snap-on electrical apparatus

(30) Priorité: 26.11.1996 FR 9614439
(43) Date de publication de la demande: 27.05.1998
(73) Titulaire: PLANET WATTOHM, 60303 Senlis (FR)
(72) Inventeur: Destruel, Marc, 60870 Villiers Saint Paul (FR); Marcou, Jean-Claude, 87000 Limoges (FR); Laigle, Jean, 93700 Drancy (FR)
(74) Mandataire: CABINET BONNET-THIRION

(56) Documents cités:
- EP-A- 0 391 713

## Description

L'invention se rapporte à un accessoire d'immobilisation d'un appareil électrique sur une goulotte d'alimentation électrique; elle permet d'améliorer la qualité de la fixation d'un appareil du type dit "à clipsage direct" sur une telle goulotte conçue à cet effet.

On connaît de nombreux appareils électriques tels que prises, interrupteurs, etc... qui sont conçus pour être montés directement sur une goulotte d'alimentation électrique, sensiblement dans le même plan que le couvercle longitudinal de celle-ci. Ces appareils comportent des pattes flexibles munies de dents qui viennent s'accrocher à des bandes de clipsage définies le long des bords longitudinaux de l'ouverture de la goulotte. Ce type de fixation est très avantageux, permettant un montage facile de l'appareil, sans nécessiter de support et/ou d'outillage particulier. Cependant, la goulotte, le plus souvent en matière plastique, présente une certaine flexibilité. Notamment, les deux parois parallèles rattachées à la paroi de fond peuvent s'écarter, au détriment de la bonne tenue de l'appareil.

Le document EP 0391713 décrit un support d'appareil électrique en plusieurs parties venant se fixer de part et d'autre de rainures définies en retrait le long des bords longitudinaux de la goulotte. Le montage des pièces nécessite leur assemblage par des vis.

D'autre part, une telle goulotte est fermée par un couvercle longitudinal venant aussi s'emboîter dans l'ouverture. Plus précisément, des tronçons de couvercle sont coupés à la demande en fonction de l'implantation, notamment en fonction des emplacements des appareils le long de la goulotte. Il se peut que des interstices subsistent entre un appareil et le ou les bords transversaux adjacents du couvercle. L'appareil est ainsi mal immobilisé longitudinalement et, surtout, des corps étrangers, éventuellement métalliques, peuvent être introduits dans la goulotte.

L'invention permet de supprimer tous ces inconvénients.

Plus précisément, l'invention concerne un accessoire d'immobilisation d'appareil électrique à clipsage direct sur goulotte d'alimentation électrique, tel que défini par la revendication 1. L'invention concerne aussi un ensemble d'alimentation électrique tel que défini par la revendication 14.

Une goulotte connue comporte deux bandes de clipsage définies par des ailes longitudinales s'étendant respectivement le long des bords internes de parois longitudinales rentrantes, parallèles, formées de part et d'autre de ladite ouverture longitudinale, les ailes formant avec lesdites parois rentrantes, d'une part une gorge longitudinale ouverte vers l'avant et d'autre part une nervure faisant saillie longitudinalement vers l'intérieur de la goulotte. Dans un tel cas, les moyens d'accrochage précités dudit renfort rigide comprennent, le long de chacun des deux côtés parallèles précités de l'accessoire, une partie plate en saillie formant un crochet rigide. Les deux parties plates opposées sont conformées pour s'emboîter dans les deux gorges longitudinales parallèles précitées.

Par exemple, les moyens d'accrochage comprennent, au voisinage de chaque crochet rigide, au moins une patte souple munie d'une dent à une extrémité libre, conformée pour prendre appui sur le bord interne libre de ladite nervure.

Préférentiellement, l'accessoire comporte, le long de chaque côté, deux telles pattes souples s'étendant de part et d'autre du crochet rigide correspondant.

L'invention sera mieux comprise et d'autres avantages de celle-ci apparaîtront plus clairement à la lumière de la description qui va suivre d'un mode de réalisation d'un tel accessoire d'immobilisation, donnée uniquement à titre d'exemple et faite en référence aux dessins annexés dans lesquels:
- la figure 1 est une vue générale en perspective d'une goulotte d'alimentation électrique dans l'ouverture de laquelle un accessoire d'immobilisation conforme à l'invention est installé;
- la figure 2 est une vue de détail montrant une prise électrique à clipsage direct, susceptible d'être montée dans la goulotte de la figure 1, à côté de l'accessoire ou entre deux tels accessoires;
- la figure 3 est une vue avant en perspective éclatée des éléments constitutifs de l'accessoire;
- la figure 4 est une vue arrière en perspective éclatée des éléments constitutifs de l'accessoire;
- la figure 5 est une vue semblable à la figure 1 avec arrachement illustrant la fixation de l'accessoire et le montage de l'appareil; et
- la figure 6 est une vue de détail en coupe et à plus grande échelle illustrant le blocage en translation du renfort rigide.

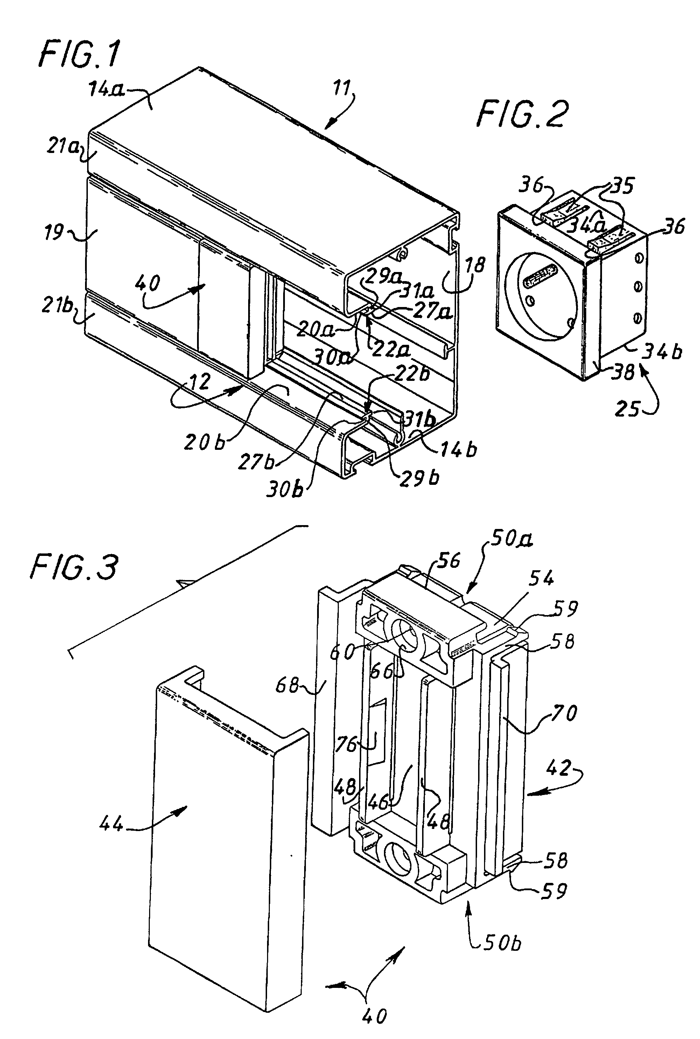

Sur les dessins et notamment sur la figure 1, on distingue une goulotte d'alimentation électrique 11 présentant une ouverture longitudinale 12 définie entre deux parois parallèles 14a, 14b rattachées à une paroi de fond 18 perpendiculaire à celles-ci. L'ouverture longitudinale est fermée par un couvercle 19. Les nervures et aménagements intemes de la goulotte ne font pas partie de l'invention et ne seront donc pas décrits plus en détail.

L'ouverture 12 de la goulotte est bordée par deux parois longitudinales rentrantes 20a, 20b, parallèles entre elles et aussi parallèles aux deux parois de la goulotte. Chaque paroi rentrante est rattachée au bord avant d'une paroi 14a, 14b par un bandeau 21a, 21b perpendiculaire à celle-ci et s'étendant sensiblement dans le même plan que le couvercle 19.

L'ouverture longitudinale 12 définie ci-dessus est munie de deux bandes de clipsage 22a, 22b aptes à permettre le montage d'un appareil électrique 25 tel que celui de la figure 2. Plus précisément, chaque bande de clipsage 22a ou 22b comporte une aile longitudinale 27a, 27b rattachée au bord interne de la paroi longitudinale rentrante correspondante. Chaque aile 27a, 27b est rattachée à l'extrémité de cette paroi rentrante correspondante par une entretoise longitudinale 29a, 29b. Cette dernière définit donc avec ladite aile et ladite paroi rentrante, d'une part une gorge longitudinale 30a, 30b ouverte vers l'avant et d'autre part une nervure 31a, 31b faisant saillie longitudinalement vers l'intérieur de la goulotte.

L'appareil électrique 25 représenté sur la figure 2 est ici une prise de courant remarquable en ce qu'elle présente, sur deux parois parallèles 34a, 34b opposées, des pattes flexibles 35 portant des dents de clipsage 36 aptes à coopérer avec lesdites bandes de clipsage 22a, 22b et plus particulièrement à venir en butée avec les nervures intérieures 31a, 31b.

L'appareil 25 est dit "à clipsage direct" dans la mesure où il vient s'encastrer sans mise en oeuvre de moyen de fixation particulier dans l'ouverture longitudinale à l'emplacement choisi par l'installateur, le cadre avant 38 de la prise venant en appui contre les bandes de clipsage 22a, 22b et les dents venant en butée sur les nervures intérieures 31a, 31b.

Comme mentionné ci-dessus, la flexibilité naturelle de la goulotte peut aboutir, en cas de contrainte, à un écartement des deux parois 14a, 14b, c'est-à-dire à un élargissement de l'ouverture longitudinale 12, préjudiciable à la bonne tenue de l'appareil électrique 25.

C'est pourquoi, selon l'invention, on prévoit un accessoire d'immobilisation 40 destiné à être mis en place dans l'ouverture longitudinale 12 de la goulotte à proximité de l'appareil électrique 25 pour empêcher, au moins localement, l'écartement de l'ouverture longitudinale. Pour obtenir ce résultat, il suffit d'un seul accessoire d'immobilisation 40 installé à côté de l'appareil, mais il est préférable d'en disposer deux de part et d'autre de celui-ci, pour des raisons qui apparaîtront clairement ci-après.

Chaque accessoire d'immobilisation consiste essentiellement en un renfort rigide 42 d'une seule pièce en matière plastique moulée, complété par un capuchon 44 également en matière plastique moulée. Le renfort rigide 42 se compose d'une paroi médiane 46 s'étendant parallèlement au plan de l'ouverture de la goulotte et de plusieurs bandes de raidissement 48, 49 venues de moulage de part et d'autre de cette paroi médiane. Les bandes de raidissement s'étendent généralement transversalement entre deux côtés parallèles opposés 50a, 50b dudit renfort, adaptés à coopérer respectivement avec les deux bandes de clipsage 22a, 22b. Des moyens d'accrochage 54 sont conformés le long de ces deux côtés parallèles 50a, 50b et espacés pour coopérer avec lesdites bandes de clipsage, respectivement.

Plus précisément, chacun de ces deux côtés 50a, 50b comprend une partie plate en saillie 56 formant un crochet rigide, défini le long dudit côté, allongé suivant la direction longitudinale de la goulotte et conformé pour s'emboîter dans la gorge longitudinale 30a, 30b correspondante de la bande de clipsage.

En outre, sur chacun des côtés est définie au moins une patte souple 58 munie d'une dent 59 à une extrémité libre. Cette dent est conformée pour prendre appui sur le bord interne libre de la nervure 31a, 31b.

Comme représenté, on prévoit en fait deux pattes souples 58 de ce genre, s'étendant de part et d'autre du crochet rigide correspondant.

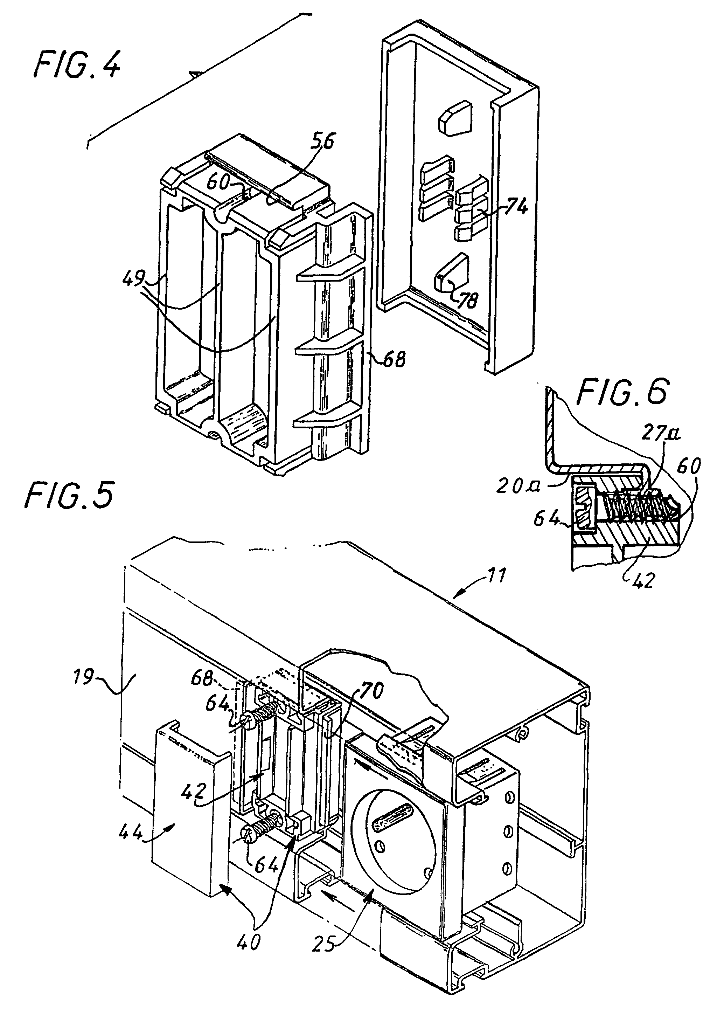

Chaque côté 50a, 50b est en outre pourvu d'un trou de vis 60 pratiqué au voisinage des moyens d'accrochage décrits ci-dessus. Le trou s'étend parallèlement aux deux pattes souples 58 et jouxte la partie plate en saillie 56 formant crochet rigide; il s'étend à égale distance des deux pattes souples. Les vis sont visibles sur la figure 5. Ce sont des vis auto-taraudeuses 64 et les trous qui les reçoivent sont pratiqués pour venir en regard des bandes de clipsage 22a, 22b, de sorte que les extrémités de vis puissent s'engager dans ces bandes de clipsage pour permettre l'immobilisation en translation du renfort rigide. Cette situation est illustrée sur la figure 6 où on remarque que les filets de la vis 64 viennent "mordre" dans l'aile 27a en matière plastique, réalisant le blocage en translation du renfort rigide 42, donc de l'appareil électrique 25.

Chaque trou est défini dans une paroi adjacente à ladite partie plate 56 adjacente en sorte que la vis auto-taraudeuse correspondante forme en partie son passage dans l'aile longitudinale 27a ou 27b voisine. En face avant, chaque trou 60 est muni d'un lamage 66 permettant d'accueillir la tête de vis correspondante.

Il résulte avec évidence de la description qui précède que la simple mise en place d'un renfort rigide 42 dans la goulotte 11 stabilise localement la largeur de l'ouverture longitudinale. Par conséquent, le fait de placer au moins un tel accessoire à côté d'un appareil électrique tel que celui qui est représenté sur la figure 2, a pour conséquence de renforcer très efficacement la tenue de l'appareil dans la goulotte en empêchant les deux parois 14a, 14b de s'écarter.

On peut néanmoins placer deux renforts rigides de ce type, respectivement de part et d'autre de l'appareil, de façon à bénéficier d'autres avantages procurés par des particularités de structure supplémentaires qui vont être décrites à présent.

Ainsi, le renfort rigide comporte le long d'un côté perpendiculaire à ceux qui comprennent les moyens d'accrochage, un bandeau d'appui 68, conformé pour venir se placer sous un bord transversal de l'extrémité d'un tronçon du couvercle 19 de la goulotte.

A l'opposé, et toujours le long d'un côté perpendiculaire à ceux qui comprennent lesdits moyens d'accrochage, un bandeau en retrait 70 est conformé pour venir se placer sous un côté de l'appareil électrique 25 monté dans l'ouverture de la goulotte. Ainsi, le bandeau d'appui et le bandeau en retrait, tous deux venus de moulage avec le corps du renfort rigide, absorbent les jeux de montage et empêchent l'introduction de corps étrangers dans la goulotte, après mise en service de celle-ci.

Le capuchon 44 est conformé pour coiffer la face avant du renfort rigide. A cet effet, il comporte des pattes de clipsage 74 venues de matière, en saillie par rapport à sa face interne et coopérant avec des dents 76 définies dans le renfort rigide le long des bandes de raidissement 48. Il comporte aussi des guides de centrage 78 venus de matière, en saillie sur sa face interne. Ces guides coopèrent avec des parois du renfort rigide parallèles auxdites parties plates formant crochets rigides. La présence des pattes de clipsage et des guides de centrage permet une mise en place du capuchon, sans ajustage et sans outillage.

Une fois en position, le capuchon 44 vient s'aligner sensiblement dans le plan du couvercle 19 qui ferme l'ouverture longitudinale de la goulotte.

## Revendications

1. Accessoire d'immobilisation (40) d'appareil électrique (25) à clipsage direct sur goulotte d'alimentation électrique (11), cette dernière présentant une ouverture longitudinale (12) munie de deux bandes de clipsage (22a, 22b) aptes à permettre le montage d'un tel appareil (25) par coopération de moyens de clipsage (36) qu'il comporte avec lesdites bandes de clipsage, comprenant un renfort rigide (42) apte à venir se monter à côté d'un tel appareil dans ladite goulotte pour stabiliser localement la largeur de ladite ouverture longitudinale, ce renfort comportant des moyens d'accrochage (56, 58, 59) conformés le long de deux côtés parallèles de celui-ci et agencés pour coopérer avec lesdites bandes de clipsage, **caractérisé en ce que** ces moyens d'accrochage comprennent une patte souple (58) munie d'une dent à une extrémité libre coopérant avec l'arrière d'une telle bande de clipsage.

2. Accessoire selon la revendication 1, **caractérisé en ce que** lesdits moyens d'accrochage comprennent, le long de chacun des côtés précités, au moins une telle patte souple (58) munie d'une dent à une extrémité libre.

3. Accessoire d'immobilisation selon la revendication 1 ou 2, pour insertion entre deux bandes de clipsage définies par des ailes longitudinales (27a, 27b) s'étendant respectivement le long des bords internes de parois longitudinales rentrantes, parallèles, de ladite goulotte, formées de part et d'autre de ladite ouverture longitudinale, chaque aile étant rattachée à l'extrémité d'une paroi rentrante correspondante par une entretoise longitudinale (29a, 29b), pour former d'une part, une gorge longitudinale (30a, 30b) ouverte vers l'avant et, d'autre part, une nervure (31a, 31b) faisant saillie longitudinalement vers l'intérieur de ladite goulotte, **caractérisé en ce que** les moyens d'accrochage précités dudit renfort rigide comprennent le long de chacun des deux côtés parallèles précités, une partie plate en saillie (56) formant crochet rigide et conformée pour s'emboîter dans une gorge longitudinale précitée et au moins une patte souple (58) précitée munie d'une dent (59) à une extrémité libre, conformée pour prendre appui sur le bord interne libre de ladite nervure.

4. Accessoire d'immobilisation selon la revendication 3, **caractérisé en ce qu'**il comporte le long de chaque côté précité, deux telles pattes souples (58) s'étendant de part et d'autre dudit crochet rigide.

5. Accessoire d'immobilisation selon l'une des revendications précédentes, **caractérisé en ce qu'**il comprend en outre des trous de vis (60), pratiqués au voisinage des moyens d'accrochage précités, pour son blocage en translation.

6. Accessoire d'immobilisation selon la revendication 5, **caractérisé en ce que** ces vis (64) sont auto-taraudeuses et **en ce que** lesdits trous (60) qui les reçoivent sont pratiqués pour venir en regard des bandes de clipsage.

7. Accessoire d'immobilisation selon l'ensemble des revendications 3 et 6, **caractérisé en ce que** chaque trou (60) est défini dans une paroi adjacente à ladite partie plate en saillie (56) formant crochet rigide et au voisinage de celle-ci, en sorte que la vis auto-taraudeuse correspondante forme en partie son passage dans l'aile longitudinale précitée, voisine.

8. Accessoire d'immobilisation selon l'une des revendications 5 à 7, **caractérisé en ce que** lesdits trous sont munis de lamages (66) en face avant, permettant d'accueillir les têtes de vis.

9. Accessoire d'immobilisation selon l'une des revendications précédentes, **caractérisé en ce que** ledit renfort rigide comporte, le long d'un côté perpendiculaire à ceux qui comprennent lesdits moyens d'accrochage, un bandeau d'appui (68) conformé pour venir se placer sous un bord transversal d'un couvercle de ladite goulotte.

10. Accessoire d'immobilisation selon l'une des revendications précédentes, **caractérisé en ce que** ledit renfort rigide comporte, le long d'un côté perpendiculaire à ceux qui comprennent lesdits moyens d'accrochage, un bandeau en retrait (70) conformé pour venir se placer sous un côté d'un appareil électrique monté dans l'ouverture de ladite goulotte.

11. Accessoire d'immobilisation selon l'une des revendications précédentes, **caractérisé en ce qu'**il comporte en outre un capuchon (44) conformé pour coiffer la face avant dudit renfort rigide.

12. Accessoire d'immobilisation selon la revendication 11, **caractérisé en ce que** ledit capuchon comporte des pattes de clipsage (74), venues de matière s'étendant en saillie de sa face interne et coopérant avec des dents (76) définies dans ledit renfort rigide.

13. Accessoire d'immobilisation selon la revendication 11 ou 12, **caractérisé en ce que** ledit capuchon comporte des guides de centrage (78) venus de matière, s'étendant en saillie de sa face interne et coopérant avec des parois dudit renfort rigide pour faciliter le bon positionnement dudit capuchon.

14. Ensemble d'alimentation électrique (11, 25, 40) comportant:
- une goulotte d'alimentation électrique (11) présentant une ouverture longitudinale (12) munie de deux bandes de clipsage (22a, 22b) aptes à permettre le montage d'un appareil électrique (25),
- un appareil électrique (25) à clipsage direct, encastré dans l'ouverture longitudinale (12) sans mise en oeuvre d'autre moyen de fixation que des moyens de clipsage (36) dudit appareil (25) coopérant avec les bandes de clipsage (22a, 22b) de la goulotte, et
- un accessoire d'immobilisation (40) de l'appareil électrique (25), qui comprend un renfort rigide (42) monté à côté de l'appareil électrique (25) dans ladite goulotte (11) pour stabiliser localement la largeur de ladite ouverture longitudinale, ce renfort comportant des moyens d'accrochage (56, 58, 59) conformés le long de deux côtés parallèles de celui-ci et agencés pour coopérer avec lesdites bandes de clipsage, respectivement.

15. Ensemble d'alimentation électrique selon la revendication 14, **caractérisé en ce que** lesdits moyens d'accrochage dudit accessoire comprennent une patte souple (58) munie d'une dent à une extrémité libre coopérant avec l'arrière d'une telle bande de clipsage.

16. Ensemble d'alimentation selon la revendication 15, **caractérisé en ce que** lesdits moyens d'accrochage dudit accessoire comprennent, le long de chacun des côtés précités, au moins une telle patte souple (58) munie d'une dent à une extrémité libre.

17. Ensemble d'alimentation selon la revendication 16, **caractérisé en ce que** les deux bandes de clipsage de ladite goulotte sont définies par des ailes longitudinales (27a, 27b) s'étendant respectivement le long des bords internes de parois longitudinales rentrantes, parallèles, formées de part et d'autre de ladite ouverture longitudinale, chaque aile étant rattachée à l'extrémité d'une paroi rentrante correspondante par une entretoise longitudinale (29a, 29b), pour former d'une part, une gorge longitudinale (30a, 30b) ouverte vers l'avant et, d'autre part, une nervure (31a, 31b) faisant saillie longitudinalement vers l'intérieur de ladite goulotte, **en ce que** les moyens d'accrochage précités dudit renfort rigide comprennent le long de chacun des deux côtés parallèles précités, une partie plate en saillie (56) formant crochet rigide et conformée pour s'emboîter dans une gorge longitudinale précitée et au moins une patte souple (58) précitée munie d'une dent (59) à une extrémité libre, conformée pour prendre appui sur le bord interne libre de ladite nervure.

18. Ensemble d'alimentation électrique selon la revendication 17, **caractérisé en ce qu'**il comporte le long de chaque côté précité, deux telles pattes souples (58) s'étendant de part et d'autre dudit crochet rigide.

19. Ensemble d'alimentation selon l'une des revendications 14 à 18, **caractérisé en ce que** ledit renfort rigide comporte, le long d'un côté perpendiculaire à ceux qui comprennent lesdits moyens d'accrochage, un bandeau d'appui (68) conformé pour venir se placer sous un bord transversal d'un couvercle de ladite goulotte.

20. Ensemble d'alimentation selon l'une des revendications 14 à 19, **caractérisé en ce que** ledit renfort rigide comporte, le long d'un côté perpendiculaire à ceux qui comprennent lesdits moyens d'accrochage, un bandeau en retrait (70) conformé pour venir se placer sous un côté d'un appareil électrique monté dans l'ouverture de ladite goulotte.

21. Ensemble d'alimentation selon l'une des revendications 14 à 20, **caractérisé en ce qu'**il comporte en outre un capuchon (44) conformé pour coiffer la face avant dudit renfort rigide.

22. Ensemble d'alimentation selon la revendication 21, **caractérisé en ce que** ledit capuchon comporte des pattes de clipsage (74), venues de matière s'étendant en saillie de sa face interne et coopérant avec des dents (76) définies dans ledit renfort rigide.

23. Ensemble d'alimentation selon la revendication 21 ou 22, **caractérisé en ce que** ledit capuchon comporte des guides de centrage (78) venus de matière, s'étendant en saillie de sa face interne et coopérant avec des parois dudit renfort rigide pour faciliter le bon positionnement dudit capuchon.

## Patentansprüche

1. Zubehör (40) zur Blockierung eines elektrischen Geräts (25) mit direkter Einklinkung auf einer elektrischen Versorgungsrinne (11), wobei diese eine Längsöffnung (12) aufweist, die mit zwei Einklinkbändern (22a,22b) versehen ist, die die Montage eines solchen Geräts (25) durch Zusammenwirken von Einklinkmitteln (36), die es aufweist, mit diesen Einklinkbändern gestatten kann, umfassend eine starre Verstärkung (42), die neben einem solchen Gerät in dieser Rinne montiert werden kann, um die Breite dieser Längsöffnung örtlich zu stabilisieren, wobei diese Verstärkung Einhakmittel (56,58,59) aufweist, die längs zweier paralleler Seiten von dieser gebildet sind und dafür ausgelegt sind, mit diesen Einklinkbändern zusammenzuwirken, **dadurch gekennzeichnet, dass** diese Einklinkmittel einen biegsamen Lappen (58) aufweisen, der an einem freien Ende mit einem Zahn versehen ist, der mit der Rückseite eines solchen Einklinkbandes zusammenwirkt.

2. Zubehör nach Anspruch 1, **dadurch gekennzeichnet, dass** die Einhakmittel längs jeder der oben genannten Seiten mindestens einen solchen biegsamen Lappen (58) aufweisen, der an einem freien Ende mit einem Zahn versehen ist.

3. Blockierungszubehör nach Anspruch 1 oder 2, für die Einfügung zwischen zwei Einklinkbändern, die durch Längsschenkel (27a,27b) definiert sind, die sich jeweils längs der Innenränder von parallelen einspringenden Längswänden dieser Rinne erstrecken, die zu beiden Seiten dieser Längsöffnung gebildet sind, wobei jeder Schenkel mit dem Ende einer entsprechenden einspringenden Wand über einen Längssteg (29a,29b) verbunden ist, um einerseits eine nach vorne offene Längsnut (30a,30b) und andererseits eine in Längsrichtung auf das Innere der Rinne zu vorstehende Rippe (31a,31b) zu bilden, **dadurch gekennzeichnet, dass** die genannten Einhakmittel dieser starren Verstärkung längs jeder der beiden oben genannten parallelen Seiten einen vorstehenden flachen Teil (56), der einen starren Haken bildet und ausgebildet ist, um in eine oben genannte Längsnut eingesteckt zu werden, und mindestens einen oben genannten biegsamen Lappen (58) aufweisen, der an einem freien Ende mit einem Zahn (59) versehen ist, der ausgebildet ist, um sich am freien Innenrand dieser Rippe abzustützen.

4. Blockierungszubehör nach Anspruch 3, **dadurch gekennzeichnet, dass** es längs jeder oben genannten Seite zwei solche biegsame Lappen (58) aufweist, die sich zu beiden Seiten dieses starren Hakens erstrecken.

5. Blockierungszubehör nach einem der vorhergehenden Ansprüche, **dadurch gekennzeichnet, dass** es außerdem Schraubenlöcher (60) aufweist, die in Nähe der oben genannten Einhakmittel für seine Blockierung in Translation vorgesehen sind.

6. Blockierungszubehör nach Anspruch 5, **dadurch gekennzeichnet, dass** diese Schrauben (64) selbstschneidend sind und dass diese Löcher (60), die sie aufnehmen, angeordnet sind, um vor die Einklinkbänder zu gelangen.

7. Blockierungszubehör nach den Ansprüchen 3 und 6 zusammen, **dadurch gekennzeichnet, dass** jedes Loch (60) in einer Wand, die diesem vorstehenden, einen starren Haken bildenden flachen Teil (56) benachbart ist, und in dessen Nähe gebildet ist, so dass die entsprechende selbstschneidende Schraube zum Teil seinen Durchgang in dem oben genannten benachbarten Längsschenkel bildet.

8. Blockierungszubehör nach einem der Ansprüche 5 bis 7, **dadurch gekennzeichnet, dass** diese Löcher auf der Vorderseite mit Senkungen (66) versehen sind, die die Aufnahme der Schraubenköpfe gestatten.

9. Blockierungszubehör nach einem der vorhergehenden Ansprüche, **dadurch gekennzeichnet, dass** diese starre Verstärkung längs einer Seite, die zu denjenigen senkrecht ist, die diese Einhakmittel aufweisen, ein Auflageband (68) aufweist, das ausgebildet ist, um unter einen Querrand eines Deckels dieser Rinne zu gelangen.

10. Zubehör nach einem der vorhergehenden Ansprüche, **dadurch gekennzeichnet, dass** diese starre Verstärkung längs einer Seite, die zu denjenigen senkrecht ist, die diese Einhakmittel aufweisen, ein zurückversetztes Band (70) aufweist, das ausgebildet ist, um unter eine Seite eines elektrischen Geräts zu gelangen, das in der Öffnung der Rinne montiert ist.

11. Blockierungszubehör nach einem der vorhergehenden Ansprüche, **dadurch gekennzeichnet, dass** es außerdem eine Kappe (44) aufweist, die ausgebildet ist, um die Vorderseite dieser starren Verstärkung abzudecken.

12. Blockierungszubehör nach Anspruch 11, **dadurch gekennzeichnet, dass** die Kappe einstückig mitgeformte Einklinklappen (74) aufweist, die sich auf ihrer Innenseite vorstehend erstrecken und mit Zähnen (76) zusammenwirken, die in dieser starren Verstärkung gebildet sind.

13. Blockierungszubehör nach Anspruch 11 oder 12, **dadurch gekennzeichnet, dass** die Kappe einstückig mitgeformte Zentrierungsführungen (78) aufweist, die sich auf ihrer Innenseite vorstehend erstrecken und mit Wänden dieser starren Verstärkung zusammenwirken, um die gute Positionierung dieser Kappe zu erleichtern.

14. Elektrische Versorgungseinheit (11,25,40) umfassend:
- eine elektrische Versorgungsrinne (11), die eine Längsöffnung (12) aufweist, die mit zwei Einklinkbändern (22a,22b) versehen ist, die die Montage eines elektrischen Geräts (25) gestatten können,
- ein elektrisches Gerät (25) mit direkter Einklinkung, das in die Längsöffnung (12) ohne Verwendung eines anderen Befestigungsmittels als die Einklinkmittel (36) dieses Geräts (25) eingelassen ist, die mit den Einklinkbändern (22a,22b) der Rinne zusammenwirken, und
- ein Zubehör (40) zur Blockierung des elektrischen Geräts (25), das eine starre Verstärkung (42) aufweist, die neben dem elektrischen Gerät (25) in dieser Rinne (11) montiert ist, um die Breite dieser Längsöffnung örtlich zu stabilisieren, wobei diese Verstärkung Einhakmittel (56,58,59) aufweist, die längs zweier paralleler Seiten von ihr ausgebildet sind, um mit diesen Einklinkbändern jeweils zusammenzuwirken.

15. Elektrische Versorgungseinheit nach Anspruch 14, **dadurch gekennzeichnet, dass** die Einhakmittel dieses Zubehörs einen biegsamen Lappen (58) aufweisen, der an einem freien Ende mit einem Zahn versehen ist, der mit der Rückseite eines solchen Einklinkbandes zusammenwirkt.

16. Versorgungseinheit nach Anspruch 15, **dadurch gekennzeichnet, dass** diese Einhakmittel dieses Zubehörs längs jeder der oben genannten Seiten mindestens einen solchen biegsamen Lappen (58) umfassen, der an einem freien Ende mit einem Zahn versehen ist.

17. Versorgungseinheit nach Anspruch 16, **dadurch gekennzeichnet, dass** die beiden Einklinkbänder dieser Rinne durch Längsschenkel (27a,27b) definiert sind, die sich jeweils längs der Innenränder von einspringenden parallelen Längswänden erstrecken, die zu beiden Seiten dieser Längsöffnung gebildet sind, wobei jeder Schenkel mit dem Ende einer entsprechenden einspringenden Wand durch einen Längssteg (29a,29b) verbunden ist, um einerseits eine nach vorne offene Längsnut (30a,30b) und andererseits eine Rippe (31a,31b) zu bilden, die in Längsrichtung auf das Innere der Rinne zu vorsteht, dass die oben genannten Einhakmittel dieser starren Verstärkung längs jeder der beiden oben genannten parallelen Seiten einen flachen vorstehenden Teil (56), der einen starren Haken bildet und ausgebildet ist, um in eine oben genannte Längsnut einzutreten, und mindestens einen oben genannten biegsamen Lappen (58) aufweisen, der an einem freien Ende mit einem Zahn (59) versehen ist und ausgebildet ist, um am freien Innenrand dieser Rippe anzuliegen.

18. Elektrische Versorgungseinheit nach Anspruch 17, **dadurch gekennzeichnet, dass** sie längs jeder oben genannten Seite zwei solche biegsame Lappen (58) aufweist, die sich zu beiden Seiten dieses starren Hakens erstrecken.

19. Versorgungseinheit nach einem der Ansprüche 14 bis 18, **dadurch gekennzeichnet, dass** diese starre Verstärkung längs einer Seite, die zu denjenigen senkrecht ist, die diese Einhakmittel aufweisen, ein Auflageband (68) aufweist, das ausgebildet ist, um unter einen Querrand eines Deckels dieser Rinne zu treten.

20. Versorgungseinheit nach einem der Ansprüche 14 bis 19, **dadurch gekennzeichnet, dass** diese starre Verstärkung längs einer Seite, die zu denjenigen senkrecht ist, die diese Einhakmittel aufweisen, ein zurückversetztes Band (70) aufweist, das ausgebildet ist, um unter eine Seite eines elektrischen Geräts zu gelangen, das in der Öffnung dieser Rinne montiert ist.

21. Versorgungseinheit nach einem der Ansprüche 14 bis 20, **dadurch gekennzeichnet, dass** sie außerdem eine Kappe (44) aufweist, die ausgebildet ist, um die Vorderseite dieser starren Verstärkung abzudecken.

22. Versorgungseinheit nach Anspruch 21, **dadurch gekennzeichnet, dass** diese Kappe einstückig mitgeformte Einklinklappen (74) aufweist, die sich auf ihrer Innenseite vorstehend erstrecken und mit Zähnen (76) zusammenwirken, die in dieser starren Verstärkung gebildet sind.

23. Versorgungseinheit nach Anspruch 21 oder 22, **dadurch gekennzeichnet, dass** die Kappe einstückig mitgeformte Zentrierungsführungen (78) aufweist, die sich auf ihrer Innenseite vorstehend erstrecken und mit Wänden dieser starren Verstärkung zusammenwirken, um die gute Positionierung dieser Kappe zu erleichtern.

## Claims

1. An immobilisation accessory (40) for immobilising an item of electrical equipment (25) with direct clipping on an electrical power supply duct (11), the latter having a longitudinal opening (12) provided with two clipping bands (22a, 22b) for permitting mounting of such an item of equipment (25) by co-operation of clipping means (36) that it comprises with said clipping bands, comprising a rigid reinforcement (42) capable of being mounted beside such an item of equipment in said duct for locally stabilising the width of said longitudinal opening, said reinforcement comprising hooking means (56, 58, 59) shaped along two parallel sides thereof and arranged to co-operate with said clipping bands, **characterised in that** said hooking means comprise a flexible lug (58) provided with a tooth at a free end co-operating with the back of such a clipping band.

2. An accessory according to claim 1 **characterised in that** said hooking means comprise along each of said sides at least one such flexible lug (58) provided with a tooth at a free end.

3. An immobilisation accessory according to claim 1 or claim 2 for insertion between two clipping bands defined by longitudinal flanges (27a, 27b) respectively extending along the internal edges of inwardly extending parallel longitudinal walls of said duct which are formed on respective sides of said longitudinal opening, each flange being attached to the end of a corresponding inwardly extending wall by a longitudinal spacer (29a, 29b) to form on the one hand a forwardly open longitudinal groove (30a, 30b) and on the other hand a rib (31a, 31b) projecting longitudinally towards the interior of said duct, **characterised in that** said hooking means of said rigid reinforcement comprise along each of said two parallel sides a flat projecting portion (56) forming a rigid hook and shaped to engage into a said longitudinal groove and at least one said flexible lug (58) provided with a tooth (59) at a free end shaped to bear against the free internal edge of said rib.

4. An immobilisation accessory according to claim 3 **characterised in that** it comprises along each said side two such flexible lugs (58) extending on respective sides of said rigid hook.

5. An immobilisation accessory according to one of the preceding claims **characterised in that** it further comprises screw holes (60) in the vicinity of said hooking means for locking same in respect of translatory movement.

6. An immobilisation accessory according to claim 5 **characterised in that** said screws (64) are self-tapping and that said holes (60) which receive them are arranged to come into facing relationship with the clipping bands.

7. An immobilisation accessory according to both of claims 3 and 6 **characterised in that** each hole (60) is defined in a wall adjacent to said flat projecting portion (56) forming a rigid hook and in the vicinity thereof in such a way that the corresponding self-tapping screw forms in part its passage in the adjacent longitudinal flange.

8. An immobilisation accessory according to one of claims 5 to 7 **characterised in that** said holes are provided with spot facings (6) in the front face for receiving the screw heads.

9. An immobilisation accessory according to one of the preceding claims **characterised in that** along a side perpendicular to those which comprise said hooking means said rigid reinforcement comprises a support strip (68) which is shaped to adopt a position under a transverse edge of a cover of said duct.

10. An immobilisation accessory according to one of the preceding claims **characterised in that** along a side perpendicular to those which comprise said hooking means, said rigid reinforcement comprises a strip (70) in set-back relationship and shaped to adopt a position under a side of an item of electrical equipment mounted in the opening of said duct.

11. An immobilisation accessory according to one of the preceding claims **characterised in that** it further comprises a cap (44) shaped to cover the front face of said rigid reinforcement.

12. An immobilisation accessory according to claim 11 **characterised in that** said cap comprises clipping lugs (74) integral therewith and extending in projecting relationship from its internal surface and co-operating with teeth (76) defined in said rigid reinforcement.

13. An immobilisation accessory according to claim 11 or claim 12 **characterised in that** said cap comprises centering guides (78) integral therewith and extending in projecting relationship from its internal surface and co-operating with walls of said rigid reinforcement to facilitate good positioning of said cap.

14. An electrical power supply assembly (11, 25, 40) comprising:
- an electrical power supply duct (1) having a longitudinal opening (12) provided with two clipping bands (22a, 22b) for permitting mounting of an item of electrical equipment (25),
- an item of electrical equipment (25) involving direct clipping which is fitted into the longitudinal opening (12) without the use of fixing means other than clipping means (36) of said item of equipment (25) co-operating with the clipping bands (22a, 22b) of the duct, and
- an immobilisation accessory (40) for the item of electrical equipment (25), which comprises a rigid reinforcement (42) mounted beside the item of electrical equipment (25) in said duct (11) for locally stabilising the width of said longitudinal opening, said reinforcement comprising hooking means (56, 58, 59) shaped along two parallel sides thereof and arranged to co-operate with said clipping bands respectively.

15. An electrical power supply assembly according to claim 14 **characterised in that** said hooking means of said accessory comprise a flexible lug (58) provided with a tooth at a free end co-operating with the back of such a clipping band.

16. A power supply assembly according to claim 15 **characterised in that** said hooking means comprise along each of said sides at least one such flexible lug (58) provided with a tooth at a free end.

17. A power supply assembly according to claim 16 **characterised in that** the two clipping bands of said duct are defined by longitudinal flanges (27a, 27b) respectively extending along the internal edges of inwardly extending parallel longitudinal walls which are formed on respective sides of said longitudinal opening, each flange being attached to the end of a corresponding inwardly extending wall by a longitudinal spacer (29a, 29b) to form on the one hand a forwardly open longitudinal groove (30a, 30b) and on the other hand a rib (31a, 31b) projecting longitudinally towards the interior of said duct, and that said hooking means of said rigid reinforcement comprise along each of said two parallel sides a flat projecting portion (56) forming a rigid hook and shaped to engage into a said longitudinal groove and at least one said flexible lug (58) provided with a tooth (59) at a free end shaped to bear against the free internal edge of said rib.

18. An electrical power supply assembly according to claim 17 **characterised in that** it comprises along each said side two such flexible lugs (58) extending on respective sides of said rigid hook.

19. A power supply assembly according to one of claims 14 to 18 **characterised in that** along a side perpendicular to those which comprise said hooking means said rigid reinforcement comprises a support strip (68) which is shaped to adopt a position under a transverse edge of a cover of said duct.

20. A power supply assembly according to one of claims 14 to 19 **characterised in that** along a side perpendicular to those which comprise said hooking means said rigid reinforcement comprises a strip (70) in set-back relationship and shaped to adopt a position under a side of an item of electrical equipment mounted in the opening of said duct.

21. A power supply assembly according to one of claims 14 to 20 **characterised in that** it further comprises a cap (44) shaped to cover the front face of said rigid reinforcement.

22. A power supply assembly according to claim 21 **characterised in that** said cap comprises clipping lugs (74) integral therewith and extending in projecting relationship from its internal surface and co-operating with teeth (76) defined in said rigid reinforcement.

23. A power supply assembly according to claim 21 or claim 22 **characterised in that** said cap comprises centering guides (78) integral therewith and extending in projecting relationship from its internal surface and co-operating with walls of said rigid reinforcement to facilitate good positioning of said cap.
